# FASCICULE DE BREVET EUROPEEN

(11) **EP 0 974 131 B1**
(45) Date de publication et mention de la délivrance du brevet: **05.03.2008**
(21) Numéro de dépôt: 97953941.8
(22) Date de dépôt: 24.12.1997
(51) Int. Cl.: G07F 7/10

(54) **PROCEDE D'INTERPRETATION DYNAMIQUE DE DONNEES POUR UNE CARTE A PUCE**
DYNAMISCHES DATENINTERPRETATIONSVERFAHREN FÜR EINE CHIPKARTE
DYNAMIC DATA INTERPRETATION METHOD FOR A CHIP CARD

(30) Priorité: 27.12.1996 FR 9616141
(43) Date de publication de la demande: 26.01.2000
(73) Titulaire: GEMPLUS, 13881 Gémenos Cédex (FR)
(72) Inventeur: AGBENU, Kodjo, 38090 VILLEFONTAINE (FR); COULIER, Charles, F-13360 Roquevaire (FR); FEYT, Nathalie, F-13005 Marseille (FR)
(86) Numéro de dépôt international: PCT/FR1997/002416
(87) Numéro de publication internationale: WO 1998/029843

(56) Documents cités:
- EP-A- 0 386 677
- EP-A- 0 409 701
- EP-A- 0 475 837
- EP-A- 0 496 656
- WO-A-96/10811

## Description

La présente invention a pour objet un procédé d'interprétation de données pour un circuit intégré électronique porté par un support portable. L'invention sera décrite dans le cadre où le support portable est une carte à puce, d'autres formes sont cependant envisageables, clé à puce, jeton à puce ou autres. L'invention concerne ce qui se passe dans le circuit intégré du support, que celui-ci soit en relation ou non avec un lecteur. Pour présenter l'invention d'une manière plus complète on la décrira cependant dans le cadre des supports portables connectables électriquement à des lecteurs.

L'invention est aussi applicable dans le cas où le support portable entre en relation avec le lecteur sans y être connecté, par exemple, par émission radio-fréquence (dans le cas des supports portables ou cartes à puces sans contacts), par liaison infra-rouge ou autre. Dans un exemple particulier, ce qui se passe dans le circuit intégré sera induit par la nature de la mise en relation avec le lecteur. Dans le cadre de la présente invention, l'interprétation de données se traduira par une signature. On appellera signature une chaîne de caractères, une chaîne de bits, qui résulte d'une autre chaîne par une transformation, la transformation pouvant être simple ou complexe.

Un support portable du type concerné par l'invention comporte un circuit électronique muni essentiellement d'une mémoire et d'un circuit d'entrée/sortie permettant à cette mémoire de communiquer avec le monde extérieur, notamment un lecteur. La particularité essentielle des supports portables est que la taille de la mémoire de leur circuit intégré est forcément limitée, ce qui a pour conséquence de limiter les utilisations du support. En effet, notamment dans le cas des cartes à puce, du fait des contraintes mécaniques que doivent subir les circuits électroniques enchâssés dans les cartes, ceux-ci ne peuvent être que physiquement petits. En effet, s'ils sont trop grands, il sont eux-mêmes soumis aux efforts supportés par la carte: ils se cassent. Cette limitation de taille impose, compte tenu de la technologie actuelle de fabrication, de limiter les places disponibles en mémoire. Par exemple dans l'état actuel de la technique, une capacité de 64 kilo octets est actuellement quasiment la plus grande disponible industriellement. Le problème général des supports portables est donc, même quand ces notions de fragilité mécaniques ne sont pas en cause, un problème de limitation de capacité.

Le circuit d'entrée sortie peut comporter un circuit câblé effectuant certaines opérations, ou même de préférence un microprocesseur dont les actions sont commandées par un programme enregistré dans une mémoire programme. La mémoire programme est de préférence contenue dans la mémoire du circuit intégré. D'une manière habituelle, le programme enregistré dans une mémoire programme comporte des parties qui ne peuvent pas être modifiées. La partie de la mémoire qui les contient est alors une mémoire morte (du type non volatile, EPROM par exemple, comportant notamment un transistor à grille flottante comme organe de mémorisation, ou du type ROM masquée, c'est à dire réalisée au moment de la fabrication du circuit intégré). La partie du programme qui peut être modifiée est enregistrée dans une partie reprogrammable de la mémoire (en pratique cette partie reprogrammable comporte des cellules de type non volatile, EEPROM, programmables et effaçables électriquement). Ces mémoires non-volatiles peuvent cependant aussi être des mémoires vives sauvegardées, la sauvegarde étant assurée par une pile.

Pour entrer en relation avec le monde extérieur, le support portable comporte un connecteur avec peu de plots (en général huit), ou une liaison hertzienne ou autre. Dans tous les cas, la transmission entre le lecteur et le support portable, et vice versa, est de type série. Tout échange de données entre ces deux systèmes est donc lent par rapport à ce qu'il pourrait être si la liaison était parallèle. Cette lenteur est quelques fois gênante pour l'utilisation.

Lors de l'entrée en relation d'un support portable avec un lecteur, il y a habituellement une phase de reconnaissance et en quelque sorte d'agrément préalable de la transaction envisagée. D'une manière connue, cette reconnaissance peut comporter une vérification de ce que le porteur du support portable qui provoque cette mise en relation est bien le porteur autorisé. Cette vérification est effectuée, par exemple, par l'obligation pour le porteur d'indiquer un numéro personnel d'identification (PIN dans la littérature anglo-saxonne). Cette vérification peut être entreprise, en théorie, par un algorithme lancé dans le lecteur, ou dans le support portable, ou dans les deux conjointement.

En outre, après avoir vérifié que le porteur est un porteur autorisé, il convient de vérifier que le support portable est bien destiné à l'application, ou à une des applications offertes par le lecteur. On appelle application, dans le domaine de supports portables, la suite des opérations effectuées tant par un microprocesseur du lecteur que par celui du support portable pour amener à la satisfaction du besoin exprimé par le porteur. Par exemple, le lecteur sera connecté à un distributeur de biens ou de services (distributeur automatique de boissons, barrière d'accès à une zone de stationnement), ou bien ce lecteur sera relié à une banque de données (par exemple dans le cas de réservations de places auprès d'une compagnie d'aviation ou de réservation de voitures auprès d'une société de location de véhicules), ou encore ce lecteur sera relié à un organisme financier pour permettre au porteur d'effectuer des opérations financières. L'application, la suite des instructions exécutées tant dans le support que dans le lecteur ou un appareil connecté au lecteur, reflète ces utilisations dans lesquelles l'utilisateur obtient satisfaction.

Il convient donc de vérifier que le lecteur et/ou le support portable sont adaptés à coopérer.

Des vérifications de ce type sont entreprises par des opérations dites de signature. Ces opérations comportent le prélèvement dans le support portable d'informations binaires relatives, préférentiellement, à l'identité du porteur, au numéro de série de la carte, à certaines données de l'application ainsi qu'à certains états électriques révélateurs du mode de fonctionnement du circuit électronique du support portable. La vérification devrait normalement prendre en considération les informations relatives à l'application, encore que cela ne soit pas impératif comme on le verra plus loin.

Avec ces éléments ainsi prélevés, le support portable ou le lecteur élaborent une signature. L'élaboration la plus simple peut consister en une juxtaposition des informations binaires prélevées. Une élaboration plus complexe peut comprendre un chiffrage de ces données. La signature ainsi élaborée est ensuite comparée à une signature type enregistrée dans le lecteur ou dans le support portable. Si la vérification est positive, l'application peut ensuite se dérouler normalement.

En général, le prélèvement par le lecteur dans le support portable de plusieurs informations est effectué petit à petit. En effet, le système opératoire du circuit du support portable ne laisse que peu de latitude au lecteur, dans le but d'empêcher un lecteur manipulé par un fraudeur, de faire découvrir les secrets de la carte. Le prélèvement petit à petit a pour inconvénient de ralentir les préliminaires de la transaction.

On a tenté par ailleurs de résoudre ce problème en stockant dans le support portable, une fois pour toutes, les éléments constants de la signature. Par exemple, on a tenté de stocker dans une mémoire non-volatile (de préférence même non-modifiable de l'extérieur) les éléments le plus couramment demandés: les références du prestataire de services, le numéro de série de la carte, certaines informations relatives à l'application et, dans le cas général, une clé publique ou privée de chiffrement.

Ceci amène par exemple à devoir stocker, dans la mémoire de la carte, le numéro de série de la carte et la clé publique ou privée en autant d'exemplaires que la carte est susceptible d'effectuer d'applications différentes. On notera que pour un même prestataire de services, par exemple une banque, il peut y avoir plusieurs applications: le retrait d'argent, la consultation de compte, la télécommande de virements et ainsi de suite. En conséquence, la duplication, autant de fois que nécessaire, des données utiles à la constitution de la signature occasionne une perte de place exagérée. En effet, il est connu qu'une clé publique utilise par exemple 512 ou 1024 bits, soit presque 2% de la capacité maximale de la mémoire à elle toute seule.

Cette situation présente par ailleurs d'autres inconvénients. Pour des raisons de taille de mémoire et/ou de vitesse de transaction, on peut être amené à proposer aux divers prestataires de services d'utiliser tous un même système opératoire du circuit électronique du support portable. Par exemple, on pourrait être tenté d'imposer que les signatures soient constituées pour tous les prestataires de la même façon. En dehors du fait qu'une telle démarche, qui finirait par être connue publiquement, ne présenterait aucune garantie de sécurité, elle ne tiendrait pas compte des désirs légitimement exprimés par les divers prestataires de voir leur signature aménagée à leur convenance.

Autrement, pour un fabricant de supports portables, la mise à la disposition de ces divers prestataires d'un circuit électronique qui leur conviendrait à tous, ne pourrait être soluble que si ce circuit électronique comportait des systèmes opératoires en autant de variantes qu'il y a de prestataires susceptibles d'utiliser ce circuit. Ceci va encore une fois à l'encontre des contraintes de limitation de capacité mémoire des circuits électroniques embarqués dans les supports portables.

Enfin, même quand il n'y a pas d'échange entre le lecteur et la mémoire de la carte, des limitations d'architecture du circuit intégré de cette carte sont rédhibitoires. Ainsi, par exemple, le microprocesseur de la carte dispose de registres d'entrée de données pour traiter des données d'entrée.

Pour des raisons de place, ces registres peuvent être de taille limitée. Leur taille limitée peut alors être insuffisante pour traiter des données trop importantes. Par exemple un tel registre d'entrée peut travailler sur deux octets, alors que la constitution d'une signature impliquera quatre ou dix octets de données. Quand c'est le cas, il reste à faire gérer par le programme de l'application les conséquences de cette situation : c'est-à-dire organiser des réitérations. Ceci présente un inconvénient de sécurité puisque cela revient à laisser au programme de l'application le soin de traiter des données dont la manipulation doit par ailleurs être protégée. Un but de l'invention est de constituer dans le système d'exploitation du microprocesseur de la carte une simplification.

EP-A-0 475 837 décrit un procédé de gestion d'un programme d'application chargé dans un support à microcircuit tel que défini dans la préambule de la revendication 1.

L'invention a pour objet de remédier à ces inconvénients de limitation de capacité mémoire, de lenteurs d'échange, et de complexité de gestion en préconisant un procédé d'interprétation de données qui possède deux caractéristiques supplémentaires. D'une part, la préparation des éléments nécessaires à l'interprétation est paramètrable. D'autre part, le circuit électronique du support portable comporte un automate adapté à recevoir ces paramètres et, au moins, à concaténer des données correspondant à ces paramètres avant l'élaboration de la signature.

Par exemple, au lieu, comme dans l'état de la technique, de faire demander au lecteur le prélèvement, dans la mémoire du circuit, d'un premier ensemble de bits, puis après les avoir reçus de faire demander le prélèvement d'un deuxième ensemble de bits et ainsi de suite pour ensuite élaborer, ou faire élaborer, la signature, dans l'invention, la demande envoyée par le lecteur est une demande composite unique interprétée dynamiquement au niveau du circuit. L'automate du circuit interprète cette demande unique, rassemble les données nécessaires, et les met à la disposition du lecteur (les lui transmet sur l'interface) pour que le lecteur élabore la signature, ou bien en variante, l'automate élabore la signature lui-même. Ou encore l'automate fait élaborer la signature par un microprocesseur du circuit.

L'avantage ainsi obtenu est, dans le cas où la signature est une simple juxtaposition d'éléments mémorisés, qu'il n'y a pas besoin de stocker en duplication les éléments de la signature pour autant d'utilisations possibles du support. Dans l'invention on constitue d'une manière dynamique la signature, ou on assemble les éléments à préparer pour sa constitution, uniquement au moment du besoin. Le stockage permanent est remplacé par une constitution en temps réel.

Dans un perfectionnement, il est même prévu, que plutôt que d'envoyer un ordre paramètré en fonction du type de signature à constituer, on enregistre dans la mémoire du circuit des paramètres d'ordre. Pour la préparation des éléments utiles à la signature, il suffit alors que le lecteur désigne au circuit celui de ces paramètres d'ordres qui doit être exécuté. Les paramètres désignés sont prélevés dans la mémoire, et ensuite ils sont appliqués à l'automate. De préférence dans ce cas, l'automate comportera un microprocesseur. Une fois que l'automate est paramètré par les paramètres lus dans la mémoire du circuit, il exécute l'ordre en allant chercher les éléments de données nécessaires pour constituer la signature tels qu'ils sont désignés dans les paramètres.

L'invention a donc pour objet un procédé d'interprétation de données pour un circuit électronique porté par un support portable électronique, notamment du type carte à puce, dans lequel
- on lit successivement plusieurs ensembles de bits à des adresses d'une mémoire du circuit, et
- on produit une signature à partir de ces ensembles de bits lus,
caractérisé en ce que
- on provoque dans le circuit une lecture composite par un ordre composite, cette lecture composite comportant la lecture d'au moins un premier ensemble de bits relatifs à une première adresse et la lecture d'au moins un deuxième ensemble de bits relatifs à une deuxième adresse, ces première et deuxième adresses étant des paramètres de l'ordre composite,
- on concatène grâce à l'ordre composite le premier ensemble de bits avec le deuxième ensemble de bits,
- on élabore avec les bits concaténés la signature demandée.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- figure 1: une architecture de circuit intégré utilisable pour mettre en oeuvre le procédé de l'invention;
- figure 2: un lecteur et un support portable utilisables pour mettre en oeuvre le procédé de l'invention dans le cas d'une transmission entre un circuit intégré et un lecteur;
- figure 3: un organigramme de différentes étapes du procédé de l'invention;
- figure 4: la description d'un message constituant une demande de lecture dans une variante de mise en oeuvre du procédé de l'invention;
- figure 5: la représentation schématique de l'architecture d'un circuit d'un support portable pour mettre en oeuvre l'invention et, en particulier, une autre variante du procédé de l'invention.

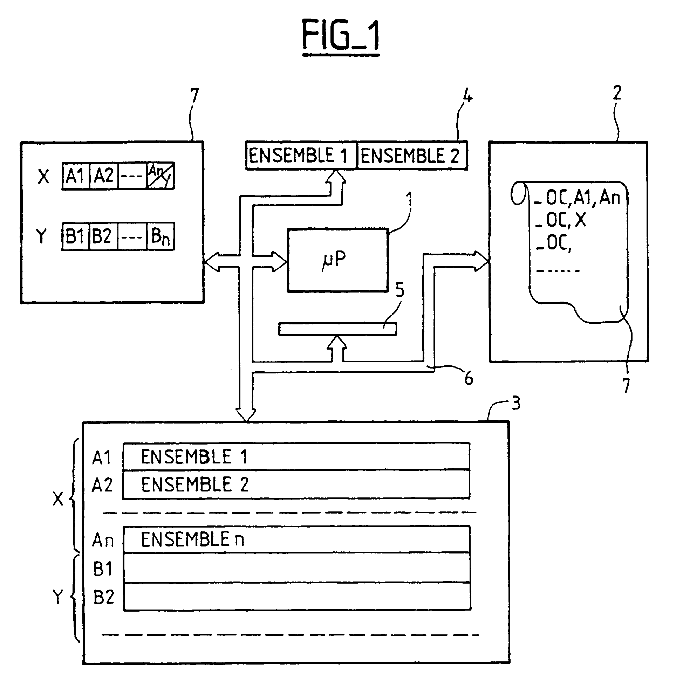

La figure 1 montre une architecture de circuit intégré pour mettre en oeuvre le procédé de l'invention. Un microprocesseur 1 y est en relation avec une mémoire programme 2, une mémoire de données 3 et deux registres respectivement d'entrée et de sortie, 4 et 5, par l'intermédiaire d'un bus 6 de données, d'adresse, et de commandes. Pour l'élaboration d'une signature (d'une chaîne de bits), dans l'état de la technique, un programme 7 devait comporter autant d'instructions que nécessaires. Avec l'invention, ces instructions sont remplacées par une instruction composite OC assortie de paramètres A1, ..., An. Pour simplifier ces paramètres représentent des adresses, dans la mémoire 3 par exemple, où se trouvent des ensembles de bits, respectivement ENSEMBLE 1, ENSEMBLE 2, ..., ENSEMBLE n, à utiliser pour composer la signature.

L'ordre composite comporte fondamentalement les micro instructions suivantes:
- lecture de 1 ou m paramètres de l'ordre OC,
- prélèvement, dans la mémoire 3 par exemple, des premiers ensembles de bits nécessaires situés aux adresse lues dans l'ordre OC,
- chargement de ces ensembles de bits dans le registre 4,
- traitement de ces ensembles de bits par le microprocesseur 1,
- transfert des bits traités dans le registre 5,
- réitération de cette suite de micro instructions pour des ensembles de bits suivants, jusqu'à complète utilisation des paramètres associés à l'ordre composite OC. Cette réitération comporte un test que le ou les paramètres qui viennent d'être traités sont les derniers ou sont suivis par d'autres.

Par exemple, pour une architecture donnée du circuit intégré, avec un registre d'entrée 4 à deux octets, et en supposant que les ensembles de bits font chacun un octet, l'ordre composite OC provoquera le traitement deux par deux (m=2 ici) des ensembles de bits désignés; en commençant par les adresses A1 et A2 par exemple. Puis on prélèvera les ensembles de bits à deux adresses de paramètres suivants, jusqu'à ce que tous les paramètres A1 à An aient été exploités.

La suite des micro instructions ainsi évoquées pourra en pratique être représentée par un ordre OC du système d'exploitation du microprocesseur 1. En variante, un circuit câblé avec un séquenceur ou un circuit séquentiel bouclé, peut être mis en service si on ne veut pas incorporer l'ordre OC au système d'exploitation du circuit intégré.

Le traitement effectué dans le microprocesseur 1 peut être réduit à sa plus simple expression: c'est-à-dire à rien du tout. Dans ce cas la mise en place dans le registre 4 (qui peut même être confondu avec le registre 5) est l'aboutissement d'une itération. Dans les faits, l'exécution de l'ordre OC est essentiellement une concaténation: c'est-à-dire une mise côte à côte des bits des ensembles 1 avec les bits des ensembles 2 à n, dans un ordre prévu à l'avance.

Dans un perfectionnement, l'ensemble des adresses A1, ..., An servant de paramètres est remplacé par une référence logique ou adresse spéciale X. A l'adresse X, dans le mémoire 3 ou même dans une autre mémoire 7 spéciale de paramètres, on trouve stockées les adresses A1, A2, ..., An utilisables. S'il n'y a qu'une adresse X spéciale utilisable, cette adresse X n'a même pas besoin d'être présente explicitement en tant que paramètre dans l'ordre OC. Elle a seulement besoin d'être implicite: l'ordre OC commençant alors par la lecture du contenu de l'adresse spéciale X. Mais il peut y avoir plusieurs adresses spéciales, X et Y par exemple. Dans ce cas l'ordre OC est paramétré par celle ou celles de ces adresses spéciales X ou Y où se trouvent les adresses A1, A2, ..., An et B1, B2, ... Bn des ensembles de bits à traiter.

Dans le cas où il y a une ou des adresses spéciales, l'ordre OC comporte une micro instruction supplémentaire visant à détecter si le paramètre suivant à traiter (A1, A2 ou X) correspond à une adresse spéciale ou non. Seront par exemple des adresses spéciales celles qui comportent une conformation particulière de bit. La micro instruction de test pour détecter s'il s'agit d'une adresse spéciale ou non peut même être incorporée dans la boucle de réitération de l'ordre OC de façon à ce qu'on puisse, par exemple, charger à l'adresse X en mémoire 7, à un dernier emplacement de paramètre à cette adresse, non pas une adresse An, mais une autre adresse spéciale Y (qui elle renvoie un traitement d'un autre ensemble B1 à Bn de paramètres).

Dans le cas de la présence d'une adresse spéciale, l'ordre OC comporte alors préalablement aux itérations, ou au fur et à mesure, la lecture du contenu des adresses A1, ..., AN, elles mêmes contenues à l'adresse spéciale X concernée.

Une partie des adresses ou paramètres peut être incorporée à l'ordre OC, une autre partie ou le tout peut provenir d'une transmission extérieure au circuit. C'est ce qui va être détaillé ci-après.

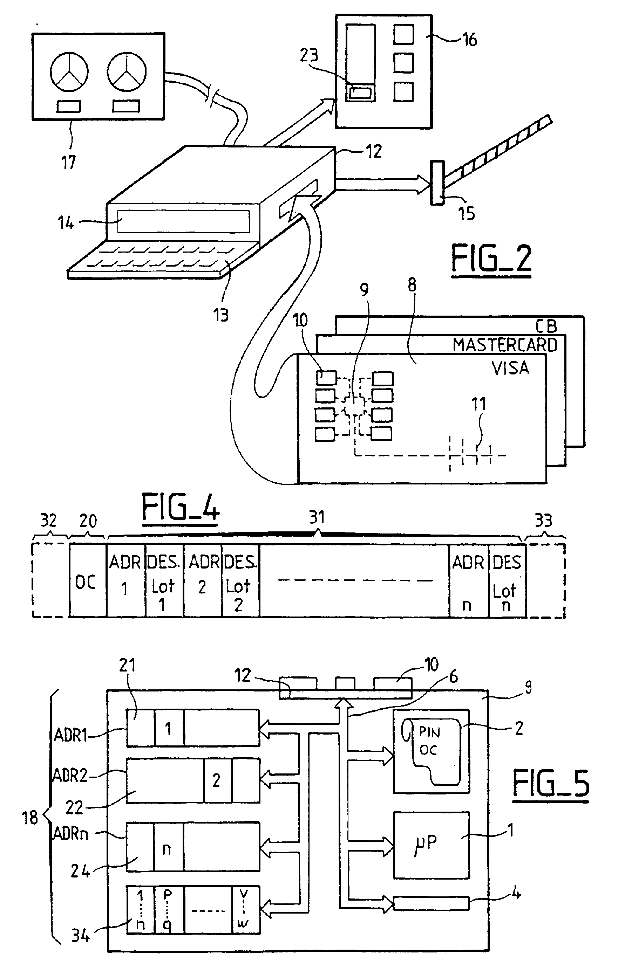

La figure 2 montre un système utilisable pour mettre en oeuvre le procédé de l'invention. Ce système comporte un ensemble de supports portables tels qu'une carte à puce 8. Cette carte à puce comporte un circuit électronique 9 relié à des plots de connexion 10 apparaissant en surface de la carte. Ces plots de connexion 10 servent à mettre en relation le circuit électronique 9 avec le monde extérieur. Cette mise en relation peut être cependant effectuée également par une antenne 11 noyée dans le corps du support portable ou éventuellement même comprise en surface du circuit électronique 9.

La carte est destinée à entrer en relation avec un lecteur 12. Ici, la relation est une liaison électrique, les plots de contact 10 venant en contact de plots de contact du lecteur 12. Le lecteur 12 comporte généralement, mais ce n'est pas une obligation, un clavier 13 et un écran 14. Généralement le lecteur 12 comporte un microprocesseur. Sur l'écran 14 sont affichés des messages permettant de guider la transaction, ou de donner des informations sur son déroulement. Le lecteur 12 est, dans un exemple en relation avec un dispositif 15 de délivrance d'un service (accès à un stationnement), un dispositif 16 de délivrance d'un bien (un distributeur de boissons), ou avec un dispositif 17 constituant une base de données (documentaire ou financière). Le lecteur 12 peut être en relation avec un seul ou plusieurs de ces dispositifs. La liaison envisagée ici est une liaison en temps réel. Elle peut néanmoins être une liaison en temps différé. La liaison entre le lecteur et le dispositif n'est pas nécessairement physique, elle peut comporter le passage par un canal de transmission hertzien ou autre.

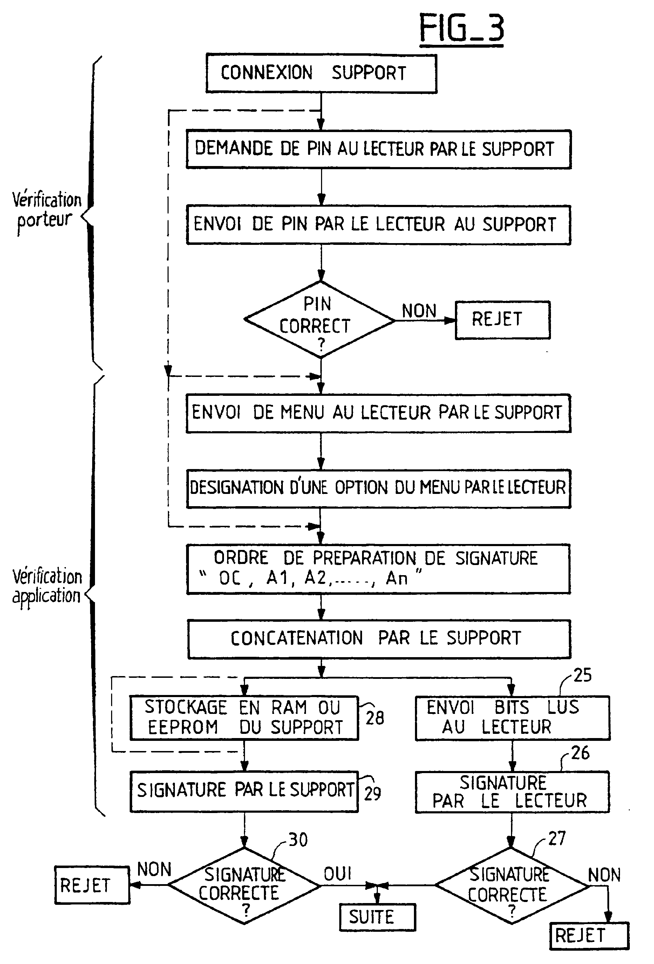

Le mode d'échange du support 8 avec le lecteur 12 comporte deux phases principales, une phase de reconnaissance globalement illustrée sur la figure 3, et une phase de transaction avec les dispositifs 15 à 17 qui ne sera pas décrite ici parce que classique. La phase de reconnaissance présente généralement une vérification du porteur du dispositif et une vérification de l'adéquation du support 8 et du lecteur 12 à une application que l'on veut exécuter.

La figure 3 montre une vérification préalable du porteur avant la vérification relative à l'application. Il est cependant tout à fait possible que l'ordre de ces vérifications soit inversé. Il est même également possible que la vérification du porteur ne soit même pas lancée. Quand elle est lancée, son déroulement est le suivant. Premièrement le support 8 est connecté au lecteur 12. Au moment où il est connecté, un détecteur de type fin de course constate l'introduction du support et sa connexion au lecteur 12.

Par la suite, dans un exemple, le circuit 9 prend la main sur la transaction et effectue une demande de renseignement relatif au numéro d'identification du porteur (PIN). En pratique le circuit 9 émet un message en direction du lecteur pour provoquer une telle demande. Cette demande est concrétisée par l'apparition sur l'écran 14 d'un message demandant au porteur de pianoter sur le clavier 13 les éléments de son code d'identification personnel. Eventuellement l'apparition du message sur l'écran 14 ne résulte pas d'une demande expresse en provenance du circuit 9. Dans ce cas c'est le lecteur 12 qui prend l'autorité sur la transaction, le circuit 9 se mettant alors en attente de réception. Puis l'opérateur compose son code PIN.

A une étape suivante, les informations d'identification personnelles du porteur sont envoyées au support par le lecteur pour vérification. Dans l'exemple décrit, la vérification est effectuée dans le circuit 9. Cependant, il est possible de retourner le mode de vérification et de faire envoyer par le circuit 9 au lecteur des informations relatives à l'identité (théorique) du porteur et à comparer dans le lecteur ces deux sources d'informations.

En réalité, ce principe de vérification est mis en oeuvre d'une manière bien plus complexe. En effet, les échanges entre le lecteur 12 et le circuit 9 pour la vérification de l'identité du porteur ne sont faits qu'après chiffrage des messages à envoyer.

A l'issue de la vérification, l'organe vérificateur délivre un message de rejet s'il n'a pas réussi, ou passe à la suite des opérations dans le cas contraire (éventuellement en donnant une information affichable sur l'écran 14 sur le caractère correct de cette première vérification).

Dans un exemple, le circuit 9 envoie ensuite au lecteur un menu à afficher sur l'écran 14. Le menu renseigne sur toutes les applications disponibles à partir du support 8 et du lecteur 12. Par exemple, le support étant une carte de transactions bancaires, de type VISA, ou MASTERCARD, ou CB (Carte Bleue), un message représentatif de ce type d'application peut être envoyé au lecteur 12 par le support 8. Dans le cas où le support 8 est un support de type multi-fonctions, toutes les fonctions disponibles seront affichées: fonction d'accès à un parc de stationnement régi par le dispositif 15, fonction de délivrance d'un bien par un guichet 23 du dispositif 16, fonction de transaction bancaire par connexion à la base de données 17, ou encore autres fonctions. Chaque fonction est représentée par une indication sur l'écran 14, généralement une ligne en langage clair qui le mentionne. Les fonctions disponibles dans la carte ne sont affichées que si elles peuvent être proposées en même temps par le lecteur 12.

L'opérateur désigne une option du menu avec un dispositif de pointage du clavier 13 et en demande l'exécution, par exemple par une touche "ENTREE" de ce clavier. Dans ces conditions, le microprocesseur du lecteur 12 est avisé de l'application concernée. Le lecteur va alors demander au circuit 9 de préparer une signature particulière pour vérifier que le support 8 est bien capable de mettre en oeuvre l'application concernée.

Si le clavier 13 et l'écran 14 sont absents, c'est que, naturellement, un seul des dispositifs 15 à 17 sera connecté au lecteur. Dans ce cas il n'y a pas de choix. Dans ce cas le lecteur n'a pas besoin de recevoir de menu en provenance du circuit 9. Dans ce cas aussi le lecteur sait exactement quel type de signature il doit faire exécuter par le support.

La figure 4 et la figure 5 montrent respectivement une structure d'ordre de préparation de signature envoyé par le lecteur 12 au circuit 9, et les opérations effectuées par le circuit 9 en correspondance, conformément à l'invention. Le circuit 9 comporte, dans un cas général, comme évoqué pour la figure 1, un microprocesseur 1. Le microprocesseur 1 est relié par un bus 6 de données, de commande, et d'adresse à la première mémoire 2 contenant un programme opératoire. Le circuit 9 comporte également reliées au même bus un jeu 18 de mémoires de données, un ou des registres 4 de mémoire dynamiques (RAM), et une interface 19 d'entrée/sortie reliée au connecteur 10. Dans son principe, le microprocesseur du circuit 9 sait, avec le bus 6, aller chercher dans la mémoire 2 des instructions, les traiter et les envoyer à leur destinataire (normalement désigné dans le code instruction) qui est soit une mémoire soit l'interface 19.

Par exemple, on a représenté dans la mémoire programme 2 une macro-instruction PIN correspondant à la vérification du porteur évoquée ci-dessus. Selon l'invention, la mémoire programme 2 comporte en outre un ordre composite OC pour élaborer la signature selon l'invention.

Quand le lecteur 12 est capable d'envoyer plusieurs ordres à la carte, il est nécessaire que l'ordre de préparation de signature comporte une indication selon laquelle cet ordre est lui-même un ordre OC de préparation de signature. En zone 20 de la figure 4 l'ordre envoyé comporte donc la désignation OC. Par contre, par exemple, dans le cas particulier de l'application 15, où le lecteur ne saurait faire qu'une chose, il ne serait même pas nécessaire qu'il envoie l'ordre OC de signature puisque la seule chose qu'il serait susceptible de demander serait justement une signature. Néanmoins, dans le cas général, l'ordre de demande de préparation de signature comportera une indication OC à cet effet. Pour des raisons de simplicité, dans la présente demande, on a indiqué en langage clair (OC) la nature des messages transmis. Bien entendu, dans la réalité des chaînes de bits sont envoyées, chaque expression en clair étant ainsi codée en binaire.

L'ordre de préparation de signature comportera par ailleurs au moins deux désignations d'adresse d'ensembles de bits, soit deux paramètres. Dans le cas général il y aura n paramètres, n étant supérieur ou égal à deux. Ces paramètres renseignent sur les adresses à désigner dans les mémoires de l'ensemble 18, et aussi, dans un exemple préféré, sur des quantités de bits à prélever à ces adresses désignées. Par exemple, un premier paramètre concerne une adresse ADR1 et une désignation d'un lot de bits: DES-lot-1. Dans un exemple le lot de bits désignés est la totalité des bits disponibles à l'adresse ADR1. Dans cet exemple ces bits sont représentatifs de l'identité du prestataire de service qui a mis en service la carte. Par exemple s'il s'agit d'une banque, il s'agira du nom et des références de la banque (sous une forme codée). Il est cependant possible de ne prélever qu'une partie des bits de l'adresse ADR1. Si, notamment, ce nom et ces références tiennent sur plusieurs octets il est possible de ne prendre en considération qu'un octet, ou que plusieurs octets consécutifs de ce nom. Pour l'instant, il s'agit de désigner les endroits de la mémoire 18 où sont à prélever les données du premier argument.

L'ordre de préparation comporte également la désignation d'au moins un deuxième argument désignant de la même manière d'autres parties de la mémoire 18, ou éventuellement les mêmes parties désignées une deuxième fois mais avec, peut-être, un choix d'octets désignés différents, ou le même choix.

En pratique, les différentes zones concernées de l'ensemble 18 sont, pour une zone 21, une zone contenant des informations relatives au prestataire de service et au numéro de série de la carte. Une zone 22 peut concerner des informations relatives à l'application, par exemple un numéro du guichet 23 auquel on peut être servi avec la carte par l'appareil 16, ou tout simplement le programme à mettre en oeuvre pour l'application concernée. Dans une troisième zone 24 on peut stocker d'autres informations propres à la carte, par exemple un nombre aléatoire (nouvellement produit à chaque session de connexion électrique de la carte), ou un compteur d'opérations par lequel la carte indique tout simplement le nombre de fois qu'elle a été sollicitée depuis sa création. Dans cet exemple, les zones 21, 22 et 24 de la mémoire seront des zones de type mémoire morte à base de cellule mémoire EPROM du type OTP (One Time Programming) programmable une seule fois. La zone 22 sera plutôt constituée de cellules mémoire de type EEPROM, effaçables et réinscriptibles. La zone 24 sera constituée de cellules mémoires volatiles, statiques dynamiques pour le nombre aléatoire ou non volatile pour le compteur.

Une fois que l'ordre de préparation de signature avec ses différents paramètres a été envoyé au circuit 9, celui-ci le reçoit dans son microprocesseur 1. Le microprocesseur 1 va alors consulter la mémoire 2 pour extraire, puis exécuter, les micro instructions relatives à l'ordre OC qu'il a reçu. Cet ordre OC consiste, dans l'invention, à aller prélever, par exemple dans la zone 21, à l'adresse ADR1 le lot des bits 1, par exemple dans la zone 22, à l'adresse ADR2, le lot des bits 2, et ainsi de suite à l'adresse n le lot des bits n. Il consiste ensuite à les assembler dans l'ordre où il sont demandés dans l'ordre de préparation de signature.

Un tel assemblage dans cet ordre est appelé une concaténation. En pratique cela consiste par exemple avec un certain nombre de mots de a bits, b bits, c bits etc à constituer un mot unique de (a + b + c) bits. On distingue les concaténations simples qui sont celles conformes à ce schéma simple, et les concaténations complexes dans lesquelles des bits consécutifs de mots de départ peuvent ne pas avoir des places consécutives dans le mot concaténé. Eventuellement pour certains mots, dans le mot concaténé, leurs poids binaires sont inversés. D'autres combinaisons sont également possibles. Il est également possible lors de la constitution d'une concaténation de calculer une clé, ajoutée à la fin du mot concaténé. Il est encore possible dans certains cas de se livrer à des traitements encore plus complexes sur les mots prélevés. L'opération complexe est normalement la signature proprement dite. Une telle signature consiste à produire une chaîne binaire représentative, selon un algorithme donné connu à l'avance, des bits prélevés. Dans l'invention, par l'ordre composite OC on entend au moins la préparation de toutes les chaînes de bits désignées dans les paramètres de signature proprement dite. La mise en oeuvre de l'algorithme intervient éventuellement en plus. Elle est effectuée par le microprocesseur 1.

Lorsque la signature (la mise en oeuvre de l'algorithme) est effectuée par le lecteur, les bits concaténés sont envoyés au cours d'une opération 25 (figure 3) au lecteur. Cet envoi peut prendre plusieurs formes. Premièrement le microprocesseur 1 ou l'automate qui exécute l'opération de préparation de signature de l'invention est suffisamment rapide pour qu'il ne soit pas nécessaire de stocker dans un grand registre 5 le mot global concaténé. Dans ce cas les bits du mot concaténé sont envoyés au fur et à mesure de leur extraction par le microprocesseur 13 hors des zones 21, 22 et 24 sur l'interface 19 en direction du lecteur 12. Pour des raisons de simplicité on pourra cependant préférer les stocker d'abord dans un registre 5 (ou 4 s'il n'y a pas de traitement). Une fois que les bits sont reçus par le lecteur 12, après l'étape 25, le lecteur effectue la signature proprement dite qui peut être simple ou complexe. Puis cette signature est comparée 27 à une signature type fournie par ailleurs par le support 8, ou connue d'avance dans le lecteur 12. A l'issue de la comparaison 27, la suite de la transaction peut être effectuée avec le lecteur 12. Ou bien il y a un message de rejet en cas d'échec de cette vérification.

En variante, dans le cas où la signature est effectuée par le support 8, il peut y avoir comme précédemment traitement direct au fur et à mesure de la concaténation, au fur et à mesure de la mise sur le bus 6 des éléments prélevés dans les mémoires 21, 22 et 24. Il peut y avoir néanmoins, à une étape 28 un stockage dans une mémoire volatile (RAM) ou dans une mémoire non volatile (EPROM) du support du mot concaténé. Puis à une étape suivante 29, le support 8 entreprend de signer selon un algorithme prévu d'avance. Dans une étape ultérieure 30, il vérifie que la signature effectuée correspond à une signature attendue et provoque, comme le lecteur 12, la continuation de la transaction ou son échec par un rejet.

Sur la figure 3, les liaisons en tirets montrent le caractère facultatif, selon l'invention de certaines des étapes décrites. La particularité de l'invention est qu'elle permet la préparation de la signature pour différents types de signature. Par exemple, selon que dans une application bancaire la carte sera d'un type ou d'un autre, par exemple de type VISA, MASTERCARD ou CB, l'ordre, figure 3, envoyé par la lecture à la carte sera (après reconnaissance de son type) un ordre paramètre en conséquence. Notamment l'organisation et l'ordre de rangement des informations dans la concaténation seront dépendants du type d'application retenu, du type de banque reconnu.

La commande ainsi envoyée comporte une première chaîne de caractères 20 OC, ou OC VISA ou OC MASTERCARD, indiquant qu'il s'agit de préparer les éléments d'une signature. Les parties 31 suivantes (ou antérieures) dans le même message de la commande renseignent sur les différents paramètres de la signature. La commande montrée sur la figure 3 est bien entendue encapsulée par des bits de signalisation 32 et 33 classiques.

La partie 20 de la commande peut ne pas être nécessaire, comme on l'a indiqué précédemment lorsque le lecteur ne sait faire qu'une chose: contribuer à une signature. De même en réception dans le circuit 9 cette partie 20 n'est pas nécessaire si elle est, par exemple, la seule première demande qu'est susceptible d'effectuer un lecteur quand il prend la main sur la transaction après que le circuit 9 se soit mis en attente à la fin de l'opération de vérification du porteur.

De même, les parties 32 et 33 peuvent contribuer à la définition de la commande. La chaîne de bits 32 représentant une information de début (START), d'émission ou de synchronisation peut remplacer l'ordre OC, non émis. Le nombre de paramètres demandés pouvant différer d'une application à une autre (indépendamment des adresses sollicitées), la fin de commande 33 peut indiquer implicitement le nombre total de paramètres devant contribuer à l'élaboration de la signature. En définitive seuls sont indispensables, dans le message envoyé par le lecteur au circuit, dans tous les cas, les paramètres nécessaires pour la signature. Dans le circuit 9 seul l'automate de préparation de la signature est nécessaire, la signature elle-même pouvant être menée à bien par le circuit 9 ou le lecteur 12 ou même par les deux conjointement.

Dans un perfectionnement, le lecteur n'envoie même pas au circuit 9 les paramètres 1 à n évoqués ci-dessus. Il se contente, pour l'opération de préparation de signature, de n'envoyer qu'une désignation du type de signature qui doit être préparée. Ainsi selon qu'il s'agit d'une application de type VISA, MASTERCARD ou CB, le lecteur enverra en lieu et place des parties 20 et 31 du message, une information relative respectivement à l'ordre OC et à VISA, MASTERCARD, CB ou autre. En définition VISA MASTERCARD ou CB représente une adresse spéciale X,Y ou Z où prélever les paramètres nécessaires. Le microprocesseur qui reçoit cette désignation associée à un ordre de signature d'un type différent va effectuer, au cours d'une opération de signature spéciale, une opération préalable supplémentaire. Pour effecteur cette préparation de signature spéciale, le microprocesseur 1 va d'abord rechercher dans une zone d'adresse spéciale de la mémoire 34, de préférence de type mémoire morte non programmable par l'utilisateur, des informations de paramètre 1 à n, ou p à q, ou ... à w correspondant à l'indication d'application concernée.

Autrement dit on évite de cette façon d'avoir à transmettre sur la liaison entre le circuit 9 et le lecteur 12 toute la partie, éventuellement longue, du message 31. La partie 20 peut être transmise en fonction des besoins du circuit 9, selon que son système opératoire l'attend ou non. S'il ne l'attend pas, c'est que la chronologie des opérations qu'il peut lancer est régie par son système opératoire. Le bus 6 dans le circuit 9 étant par contre un bus de type parallèle, la mise en oeuvre de l'opération de préparation de signature vue jusqu'ici va être plus rapide si le microprocesseur 1 lit les paramètres dans la mémoire 34 au lieu de les recevoir par l'interface 19. Sur le plan de l'occupation de mémoire, chaque paramètre peut être équivalent à quatre octets: 2 octets d'adresses de départ d'une partie de la mémoire 21, 22 ou 24 à lire, et deux octets pour l'adresse de fin de cette partie. Soit quatre octets. Pour une limite pratique de cinq ou six paramètres on arrive à un maximum d'occupation de 20 octets avec la variante où la structure de préparation de la concaténation est enregistrée dans le circuit 9. Ceci est à comparer à 128 octets qui sont nécessaires pour ne mémoriser rien que la clé secrète, ou la clé publique dans l'état de la technique.

L'invention présente enfin deux avantages supplémentaires par rapport à l'état de la technique. D'une part, du fait de la limitation des échanges entre le support et le lecteur 12, il y a premièrement moins de risque de corruption des bits transmis entre le support et le lecteur et il y a donc moins de possibilité pour un fraudeur de savoir ce qui se passe.

Deuxièmement, l'invention permet de modifier, à la demande du prestataire, la nature de la signature à entreprendre. En effet, la fonction de l'automate enregistrée dans la mémoire programme 2 pour la signature a seulement besoin d'être lancée, ce qui est effectué par le microprocesseur 1 lorsque l'ordre OC est reçu dans le message 20, 31. L'ordre OC n'a besoin de connaître que les paramètres utiles à la signature: A1 à An. Lorsqu'un prestataire de service veut changer la nature de l'opération de vérification de son application, il lui suffit de modifier dans les lecteurs 12 concernés le paramétrage de son ordre de signature. En variante, on peut prévoir que la mémoire 34 sera réinscriptible (éventuellement sous certaines conditions) et modifier la nature des paramètres qui y sont enregistrés pour l'application concernée.

Dans certains cas, l'ordre composite, en plus de la concaténation au fur et à mesure, peut effectuer un algorithme de chiffrement, par exemple un algorithme RSA, dont les paramètres désigneront les données de la mémoire sur lesquelles doit être calculé le résultat chiffré.

## Revendications

1. - Procédé d'interprétation de données pour un circuit électronique porté par un support portable électronique, notamment du type carte à puce, dans lequel
- on lit successivement plusieurs ensembles de bits à des adresses d'une mémoire du circuit, et
- on interprète les ensembles de bits lus, en produisant une signature à partir de ces ensembles de bits lus,
**caractérisé en ce que**
- on provoque dans le circuit une lecture composite par un ordre composite, cette lecture composite comportant la lecture d'au moins un premier ensemble de bits relatifs à une première adresse et la lecture d'au moins un deuxième ensemble de bits relatifs à une deuxième adresse, ces première et deuxième adresses étant des paramètres de l'ordre composite,
- on concatène avec l'ordre composite le premier ensemble de bits avec le deuxième ensemble de bits,
- on élabore avec les bits concaténés la signature demandée.

2. - Procédé selon la revendication 1, **caractérisé en ce que**
- on met le circuit en relation avec un lecteur,
- le lecteur envoie au circuit une demande d'élaboration de signature, et
- le circuit émet un message correspondant aux bits concaténés.

3. - Procédé selon la revendication 2, **caractérisé en ce que**
- on envoie au circuit une demande d'élaboration de signature assortie d'arguments (RSA), et **en ce que**
- on remplace des paramètres de l'ordre composite par les arguments envoyés.

4. - Procédé selon la revendication 3, **caractérisé en ce que**
- on exécute l'ordre composite en complétant les arguments envoyés par des paramètres propres au support.

5. - Procédé selon l'une quelconque des revendications 1 à 4, **caractérisé en ce que**
- on range les paramètres de l'ordre composite à une adresse spéciale,
- on exécute l'ordre composite en lisant d'abord le contenu de l'adresse spéciale et en utilisant comme paramètres de cet ordre une partie du contenu de ce qui est lu à l'adresse spéciale.

6. - Procédé selon la revendication 5, **caractérisé en ce que**
- on réexécute l'ordre composite pour une autre partie du contenu de l'adresse spéciale, et
- on réitère cette réexécution jusqu'à la fin du contenu de l'adresse spéciale.

7. - Procédé selon la revendication 6, **caractérisé en ce que**
- on teste si le contenu de l'adresse spéciale est lui même une autre adresse spéciale, et, si c'est le cas,
- on réexécute l'ordre composite pour une partie du contenu de cette autre adresse spéciale.

8. - Procédé selon l'une quelconque des revendications 1 à 7, **caractérisé en ce que**
- on élabore avec les bits lus une signature simple.

9. - Procédé selon l'une quelconque des revendications 1 à 7, **caractérisé en ce que**
- on élabore avec les bits lus une signature complexe, l'ordre composite comportant, après la lecture et la concaténation, un traitement des bits lus pour les transformer en des bits différents.

10. - Procédé selon l'une quelconque des revendications 1 à 9, **caractérisé en ce que**
- on élabore la signature dans le circuit.

11. - Procédé selon l'une des revendications 1 à 10, **caractérisé en ce que**
- le premier ensemble de bits et le deuxième ensemble de bits sont distincts et sont choisis parmi des bits représentatifs
- de l'identité ou des références d'un porteur du support,
- d'un code secret ou d'un numéro de série du circuit,
- des données relatives à une utilisation particulière du support,
- ou d'un compteur d'opérations, d'un nombre aléatoire ou de données dynamiques contenus dans le circuit (2).

12. - Procédé selon l'une quelconque des revendications 1 à 11, **caractérisé en ce que**
- le lecteur envoie au circuit un message de demande de lecture composite qui est de nature différente selon que le circuit doit servir pour une première application (VISA) ou pour une deuxième application (MASTERCARD) différente de la première.

## Claims

1. - Data interpretation method for an electronic circuit contained in a portable electronic medium, in particular such as a chip card, wherein
- several groups of bits are successively read at addresses of a memory of the circuit, and
- the read groups of bits are interpreted, producing a signature based on these read groups of bits, **characterised in that**
- composite reading takes place in the circuit by a composite order, this reading including reading a first group of bits relating to a first address and reading at least one second group of bits relating to a second address, these first and second addresses being parameters of the composite order,
- the composite order is used to concatenate the first group of bits with the second group of bits,
- the requested signature is produced using the concatenated bits.

2. - Method according to claim 1, **characterised in that**
- the circuit is associated with a reader,
- the reader sends the circuit a request to produce a signature, and
- the circuit emits a message corresponding to the concatenated bits.

3. - Method according to claim 2, **characterised in that**
- the circuit is sent a request to produce a signature with added arguments (RSA), and **in that**
- the parameters of the composite order are replaced with the sent arguments.

4. - Method according to claim 3, **characterised in that**
- the composite order is executed by completing the sent arguments with parameters that are specific to the medium.

5. - Method according to any one of the claims from 1 to 4, **characterised in that**
- the parameters of the composite order are stored at a special address,
- the composite order is executed by first reading the contents of the special address and then using a part of the contents read at the special address as parameters of this order.

6. - Method according to claim 5, **characterised in that**
- the composite order is executed again for another part of the contents of the special address, and
- this execution is repeated until the end of the contents of the special address.

7. - Method according to claim 6, **characterised in that**
- a test is performed to see whether the contents of the special address are in turn another special address and, if this is the case,
- the composite order is executed again for part of the contents of this other special address.

8. - Method according to any one of the claims from 1 to 7, **characterised in that**
- a simple signature is produced using the read bits.

9. - Method according to any one of the claims from 1 to 7, **characterised in that**
- a complex signature is produced using the read bits, the composite order including, after reading and concatenation, processing the read bits to transform them into different bits.

10. - Method according to any one of the claims from 1 to 9, **characterised in that**
- the signature is produced in the circuit.

11. - Method according to one of the claims from 1 to 10, **characterised in that**
- the first group of bits and the second group of bits are distinct and are chosen from among bits that represent
- the identity or references of the owner of the medium,
- a secret code or a serial number of the circuit,
- data relating to a specific use of the medium,
- or an operation counter, a random number or dynamic data contained in the circuit (2).

12. - Method according to any one of the claims from 1 to 11, **characterised in that**
- the reader sends the circuit a message requesting a composite reading which is different according to the whether the circuit is used for a first application (VISA) or a second application (MASTERCARD) which is different from the former.

## Patentansprüche

1. Dateninterpretationsverfahren für einen elektronischen Schaltkreis, der von einem mobilen elektronischen Träger getragen wird, insbesondere vom Typ Chipkarte, bei dem man
- nacheinander mehrere Bitgruppen an Adressen eines Speichers des Schaltkreises liest, und
- die gelesenen Bitgruppen interpretiert, um ab diesen gelesenen Bitgruppen eine Signatur zu erzeugen,
**dadurch gekennzeichnet, dass** man
- in dem Schaltkreis eine kombinierte Lesung durch einen kombinierten Befehl herbeiführt, wobei diese kombinierte Lesung die Lesung mindestens einer ersten Bitgruppe bezüglich einer Adresse und die Lesung mindestens einer zweiten Bitgruppe bezüglich einer zweiten Adresse umfaßt, wobei diese erste und zweite Adresse Parameter des kombinierten Befehls sind,
- dank dem kombinierten Befehl die erste Bitgruppe mit der zweiten Bitgruppe verkettet,
- mit den verketteten Bits die gewünschte Signatur erstellt.

2. Verfahren gemäß Anspruch 1, **dadurch gekennzeichnet,**
**dass**
- man den Schaltkreis mit einem Lesegerät verbindet,
- das Lesegerät eine Signaturerstellungsanforderung an den Schaltkreis sendet, und
- der Schaltkreis eine den verketteten Bits entsprechende Nachricht sendet.

3. Verfahren gemäß Anspruch 2, **dadurch gekennzeichnet, dass** man
- an den Schaltkreis eine Signaturerstellungsanforderung begleitet von Argumenten (RSA) sendet, und
- die Parameter des kombinierten Befehls durch die gesendeten Argumente ersetzt.

4. Verfahren gemäß Anspruch 3, **dadurch gekennzeichnet, dass** man
- den kombinierten Befehl ausführt, indem man die gesendeten Argumente mit Parametern des Trägers ergänzt.

5. Verfahren gemäß einem der Ansprüche 1 bis 4, **dadurch gekennzeichnet, dass** man
- die Parameter des kombinierten Befehls an einer speziellen Adresse verzeichnet,
- den kombinierten Befehl ausführt, indem man zunächst den Inhalt der speziellen Adresse liest und als Parameter dieses Befehls einen Teil des Inhalts des an der speziellen Adresse ausgelesenen verwendet.

6. Verfahren gemäß Anspruch 5, **dadurch gekennzeichnet, dass** man
- den kombinierten Befehl nochmals für einen anderen Teil des Inhalts der speziellen Adresse ausführt, und
- diese erneute Ausführung bis zum Ende des Inhalts der speziellen Adresse wiederholt.

7. Verfahren gemäß Anspruch 6, **dadurch gekennzeichnet, dass** man
- testet, ob der Inhalt der speziellen Adresse selbst eine spezielle Adresse ist, und in diesem Fall
- den kombinierten Befehl nochmals für einen Teil des Inhalts dieser anderen speziellen Adresse ausführt.

8. Verfahren gemäß einem der Ansprüche 1 bis 7, **dadurch gekennzeichnet, dass** man
- mit den gelesenen Bits eine einfache Signatur erstellt.

9. Verfahren gemäß einem der Ansprüche 1 bis 7, **dadurch gekennzeichnet, dass** man
- mit den gelesenen Bits eine komplexe Signatur erstellt, wobei der kombinierte Befehl nach dem Lesen und der Verkettung eine Verarbeitung der gelesenen Bits umfaßt, um sie in andere Bits umzuwandeln.

10. Verfahren gemäß einem der Ansprüche 1 bis 9, **dadurch gekennzeichnet, dass** man
- die Signatur im Schaltkreis erstellt.

11. Verfahren gemäß einem der Ansprüche 1 bis 10, **dadurch gekennzeichnet, dass**
- die erste Bitgruppe und die zweite Bitgruppe unterschiedlich sind und unter repräsentativen Bits gewählt werden für
. die Identität oder Referenzen eines Inhabers des Trägers,
. einen Geheimcode oder eine Seriennummer des Schaltkreises,
. Daten bezüglich einer besonderen Verwendung des Trägers,
. oder für einen Zähler von Operationen, einer Zufallszahl oder dynamischen Daten, enthalten im Schaltkreis (2).

12. Verfahren gemäß einem der Ansprüche 1 bis 11,
**dadurch gekennzeichnet, dass**
- das Lesegerät dem Schaltkreis eine kombinierte Leseanforderungsnachricht sendet, die unterschiedlich ist, je nachdem, ob der Schaltkreis für eine erste Applikation (VISA) oder für eine zweite Applikation (MASTERCARD) dienen soll, die sich von der ersten unterscheidet.
